# EUROPEAN PATENT APPLICATION

(11) **EP 1 836 902 A1**
(43) Date of publication of application: **26.09.2007**
(21) Application number: 06111639.8
(22) Date of filing: 23.03.2006
(51) Int. Cl.: A23L 1/00, A61K 9/20, A61K 9/16

(54) **Extruded glassy vitamin C particles**

(71) Applicant: FIRMENICH SA, 1211 Genève 8 (CH)
(72) Inventor: BOUQUERAND, Pierre-Etienne, 74930, PERS-JUSSY (FR)
(74) Representative: Salvaterra-Garcia, Maria de Lurdes

(57) **Abstract**

The present invention relates to process for the preparation of extruded particles comprising vitamin C and to processes for the manufacture of said particles. The invention further relates to food products comprising the particles of the invention.

## Description

### Technical Field

The present invention relates to a process for the preparation of glassy particles comprising vitamin C dispersed in a carbohydrate matrix and a method for preventing oxidation and/or for increasing stability of vitamin C in application. The invention further relates to food products comprising the particles.

### Background of the Invention

The present invention relates to vitamin fortification of food products and more particularly to shelf stable vitamin C fortified consumer products.

The use of vitamins as ingredients for the fortification of food products is well known. However, the addition of vitamins, particularly water-soluble vitamins such as vitamin C, to foods is still confronted with several difficulties. A particular problem is that the stability of the vitamin over time, after it has been incorporated in the food product, cannot be ensured.

The prior art has repeatedly addressed this problem as is evidenced for example in documents such as US 5,972,395 or US 6,436,453 which carry extensive descriptions of pertinent prior art in this field.

In spite of the many efforts carried out in the past, there is still the need to improve solid products of vitamin C to be used in foods and provide the Recommended Daily Allowances (RDA) of vitamin C of about 60 mg per day for an adult.

International patent application WO 2005/006885, which includes a representative disclosure of the particular problems encountered in this field, contains a statement to the effect that "... the storage environment contributes to the degrading of the vitamins, especially vitamin C. For example, atmospheric oxygen and moisture can cause degradation through the oxidative process. Furthermore, depending on the type of food used, naturally occurring chemicals or enzymes can further increase the rate of degradation ... Another problem in fortifying foods with vitamins is to do so without changing the flavor profile of the food. The vitamin itself may provide off-flavors. In addition, the solution to one problem such as stabilizing the vitamin to withstand degradation may itself change the sensory or flavor profile of the food product. Optimally, the solution to providing a shelf stable vitamin in food products would also not detract from the target sensory profile or otherwise affect the character of the food product other than its vitamin content. It is desirable that any vitamin C inclusion does not impart a significant off-flavor to the food".

This document, which proposes as a solution to the above problems the triple encapsulation of vitamins, also states that encapsulation thereof in glassy carbohydrate matrices is not an ideal solution as it may result in rubbery or chewy textures, or yet because the matrices may themselves be susceptible to moisture and oxidation.

In fact, vitamin C is a crystalline solid with a high melting point of 190°C but, as a result of its sensitivity to moisture, it becomes de-crystallized and subsequently acts as a plasticizer of the encapsulation carriers, such as extrudable materials, lowering their glass transition and increasing their hygroscopicity. It is therefore necessary to provide matrices that allow a maximum amount of vitamin C to remain in a crystalline state throughout the extrusion process.

US patent 6,436,453 provides a mineral or vitamin fortification ingredient obtained by encapsulation of the mineral or vitamin in a grindable, glassy matrix composition which also carries a large amount of an edible oil. The means used by the inventors to limit the interaction between the active and the carrier is to embed the active within a large amount of edible oil producing a oily slurry prior to the incorporation to the carrier. The resulting drawback is a first limitation of the load of active within the particle. The encapsulating matrices specifically taught in this document contain at least 50% of mono and disaccharides (namely glucose, fructose, maltose, sucrose) and are mostly adapted to the extrusion of minerals which are not particularly sensitive to heat as the extrusion has to be performed at high temperature and low water content to ensure an acceptable Tg at room temperature (> 30°C). Decrystallized vitamin C has a negative impact on such matrices acting as plasticizer and lowering the particle Tg to values below room temperature. In addition those matrices are not suitable for the encapsulation of large amounts of acids as when pH < 4, the fructoseolygosaccharides tend to hydrolyse and sucrose is known to invert into glucose/fructose.

We have now surprisingly established that, in spite of the prior art knowledge discouraging the use of glassy matrices for the preparation of solid vitamin C products, it is possible to provide extruded vitamin C products that are stable during storage and preserve their integrity during application, provided that specific matrix materials are carefully selected and that the products are manufactured under process conditions that make it possible to keep vitamin C in its crystalline form. Although the prior art has repeatedly disclosed the suitability of a wide variety of raw materials as the extrusion carriers for vitamin C, we have been able to establish that, in order to balance any plasticizing effect from the minor part of the vitamin which may be decrystallized during the extrusion process it is necessary to use certain materials in the carbohydrate based matrix, i.e. materials having a molucular weight of at least 900 Da, and more preferably above 1500 Da.

It is therefore an objective of the present invention to provide a process for encapsulating vitamin C in a glassy carbohydrate matrix, which process leads to particles of vitamin C that are perfectly stable and retain 70% or more of their initial content in vitamin C once processed in applications such as candies and baked goods. The latter undergo processing conditions which involve the use of high temperatures and contact with moisture, which conditions, according to the above-cited prior disclosure, would have been expected to lead to degradation of the vitamin C particles based on glassy carbohydrate matrices. The particles of the invention, however, remained unaltered in such applications and retained most of their initial content in vitamin C after incorporation in the baked goods.

This is a totally unexpected result in view of the prior art, wherein attempts to stabilize vitamin C in applications have mainly dealt with coating of the latter for protection or incorporation thereof in glassy matrices having a high sugar content. To avoid contact of vitamin with water, it has in fact been known to coat it with fats and/or waxes, but such protection barriers are not very effective, particularly at high food processing temperatures. In order to reinforce them, it is possible to provide several layers of coating, such as is described for example in WO 2005/006885 above-cited, but this requires complex production methods that are costly and time-consuming.

Moreover, due to the instability of vitamin C in the presence of water and heat, it has been previously necessary to compensate any losses of the latter during food processing by overdosing the amount of vitamin C incorporated in the foods, with the inevitable negative effect on taste and organoleptic properties of the latter.

The present invention provides a method that avoids all these problems, is cost effective and allows encapsulation of vitamin C without significant losses thereof. The vitamin C products of the invention remain stable for long storage periods and are ideally suited for use in high moisture and/or temperature processing environments. The encapsulated vitamin C products of the invention are produced virtually in the asence of water and without adverse interaction between the vitamin C and the matrix material. There is no need to remove substantial amounts of plasticizer, namely water, and the vitamin C solids obtained can be easily incorporated into the food products, in isolation from the other ingredients in the latter.

### Summary of the Invention

One object of the invention is an extruded solid of vitamin C, consisting of a glassy matrix of carbohydrate material containing the vitamin C, the mono- and di-saccharide content of said matrix material being not above 10% by weight, relative to the weight of carbohydrate material, and wherein at least 80% by weight of the vitamin C, relative to the total amount of vitamin C contained in the solid product, is in crystalline form.

The present invention also provides a process for the preparation ofstable vitamin C particles intended for use in edible or chewable consumer products, wherein the vitamin C is admixed with the carbohydrate matrix material and an appropriate amount of a plasticizer, and the mixture is then heated within a screw extruder to a temperature above the glass transition temperature of the matrix material, so as to form a molten mass capable of being extruded through a die.

The present invention also provides extruded solid products comprising vitamin C dispersed in carbohydrate materials, characterised in that they have a content in vitamin C between 5 and 40% by weight, more preferably between 10 and 30% by weight, relative to the weight of the particle.

Furthermore, it is an objective of the invention to provide glassy vitamin C products having a sufficiently high glass transition temperature (Tg) to warrant stability at room temperature. Advantageously, the T_{G} of the vitamin C powder should be above 40°C, more preferably between 40°C and 100°C, even more preferably between 40°C and 60°C.

In a further aspect, the present invention provides edible consumer products comprising the solid vitamin C products of the invention.

The vitamin C particles obtained according to the invention remain stable against oxidation and moisture, and survive the high temperatures of food processing which are typical of the manufacture of baked or cooked goods such as candies and biscuits for example. When subjected to such thermal processes, they have been shown to retain at least 70%, and more preferably above 80%, by weight of their original content in vitamin C once processing has been completed.

### Description of the Invention

Within the context of this specification the word "comprises" is taken to mean "includes, among other things and it is not to be construed as "consists only of".

In the context of the present invention, percentages are percentages by weight of dry matter, unless otherwise indicated. Similarly, if proportions are indicated as parts, parts of weight of dry matter are meant.

The invention relates to an extruded solid of vitamin C, consisting of a glassy matrix of carbohydrate material containing the vitamin C, the sugar content, i.e. mono- and di-saccharides content, of said matrix being not above 10% by weight, relative to the weight of carbohydrate material, and wherein at least 80% by weight of the vitamin C, relative to the total amount of vitamin C contained in the solid product, is in crystalline form.

By "vitamin C" it is understood here any current vitamin C component commonly used as a supplement in consumer products. The most common are ascorbic acids.

The term "crystalline state" is intended to mean a solid state in which molecules are ordered in a regular lattice on a microscopic scale. As a solid is heated, the molecules vibrate about their position in the lattice until, at the melting point, the crystal breaks down and the molecules start to flow. There is a sharp distinction between the solide and the liquid state that is separated by a *first order phase transition.* This transition is thermodynamic: the crystal is energetically more favorable than the liquid when below the melting point. Freezing of molecular movement is marked by a release of heat known as *the heat of fusion.* The crystalline state is often opposed to a supercooled liquid that is in an amorphous solid state known as the glassy state. Glass transition is *a second order phase transition.* The molecules of a glass take on a fixed but disordered arrangement.

As previously mentioned the invention also relates to vitamin C particles obtained via extrusion of a carbohydrate melt in which the vitamin C has been incorporated. It typically comprises preparing a mixture of a continuous phase carrier containing the vitamin C component therein and having a low water content so as to ensure that the glass transition temperature of said mixture is the glass transition temperature of the final product; heating said mixture within a screw extruder to a temperature comprised between 80 and 100°C to form a molten mass; and extruding the molten mass through a die. The molten mass can then be chopped directly as it exits the die, i.e. at the temperature of extrusion, or be cooled before chopping, to form vitamin C particles of the desired dimension.

The extrusion is carried out under conditions allowing the vitamin C to remain mainly in a crystalline state, shear being minimized by a low mechanical energy input and low process temperature (below 95°C). Vitamin C can be added to the molten carrier by means of a side feeder and a single screw extruder can be used to minimize the shear, if desired.

In embodiments of the invention, the matrix materials will be formed preferably of polysaccharides selected from the group consisting of starch and pre-gelatinized starch, maltodextrine, gum Arabic, modified starches, dextrines, and mixtures thereof.

According to preferred embodiments, there will be used maltodextrine having a dextrose equivalent DE below 18 and, more preferably of up to 10.

The matrix carbohydrate material will have a content in sugars not above 10% by weight, relative to the weight of carbohydrate material.

By the expression "sugars", it meant here any material or mixture of materials consisting essentially of mono- and/or di-saccharides, added as pure compounds or as a part of the higher molecular weight compounds.

Preferably, maltodextrine shall be used, more preferably having a DE below 18, and most preferably around 10.

Owing to vitamin C's sensitivity to water and heat, a minimum amount of water is used in the process of the invention and the processing conditions are such as to ensure that a maximum content in crystalline vitamin C is obtained in the end extruded process.

Moreover, the amount of water used will depend on the matrix material and can be easily adjusted by the skilled person to ensure that a glassy product having a Tg above room temperature and preferably comprised between 30 and 60 C, typically around 40 C. The matrix materials typically have a content in water not above 5% by weight and a further amount of water below 5% by weight, relative to the total weight of the solids used in the extrusion process, may be used. The total moisture content of the extruded solid shall preferably be less than 10-15%, depending on the carrier Mw.

In the extrusion processes of the invention, the glass forming matrix carrier, i.e. the polysaccharide material as defined above, is thus pre-blended with the crystalline vitamin C raw material to form a dry mix to be melt. Preferably, a very small amount of a strongly apolar compound such as a medium chain triglyceride is added to this pre-blend prior to the extrusion to enhance the melt rheology and slippage of the molten mass through the die at the end of the extrusion.

The amount of medium chain triglyceride used shall however not exceed 2.5% by weight, relative to the weight of the polysaccharide used as the vitamin C carrier in the extruder and its role is strictly as a lubricant, not as a material for coating the vitamin C crystals. Suitably medium chain triglycerides for this purpose are known to the skilled person, an example being neobee.

This pre-blend is then heated to a melt under conditions ensuring a minimal exposure of the vitamin C to both moisture and heat.

The extrusion of the blend requires a usual extruding apparatus. A commercially acceptable extruding apparatus is that sold under the tradename of Clextral BC 21 twin-screw extruder equipped with a cutter knife allowing to chop the melt at the die exit, when it is still in a plastic condition. However, extruding apparatus are not limited to the twin screw variety and may also include, for example, single screw, ram, or other similar extrusion methods.

During the extrusion process, the blend is forced through die holes with predetermined diameter ranging from 0.5 to 10 mm and preferably from 1 to 3 mm, although higher or lower die hole diameters are also possible. The resulting extrusion pressures measured in the die head are comprised between 0.1 and 100x10⁵ Pa, preferably between 1 and 10x10⁵ Pa.

The amount of vitamin C or ascorbic acid, or of precursors thereof, that can thus be encapsulated in the extrudate obtained can be as high as 40% by weight, relative to the weight of extrudate. More preferably, contents of vitamin C between 10 and 20% by weight will be obtained according to the process of the invention. The latter thus provides advantageous vitamin C supplements that are not only stable at room temperature but can also withstand the processing temperatures that are typical of cooked, extruded or baked foods.

Surprisingly, the inventors of the present invention found that the stability of the ascorbic acid could be maintained, even at elevated temperatures, owing to the properties of the extrudate thereof obtained under the conditions above.

Even more surprisingly was the fact that, after processing of foods such as baked and extruded products, the content in vitamin C of the latter had been retained in an amount of up to 70% or more of the original amount added to the food before processing.

The vitamin C products produced by the process according to the invention can thus be used to impart or modify the nutrient properties of a great variety of foods without being affected by the other ingredients in the food or by the typical processing conditions of food production. Typical examples of the foods into which such vitamin C extrudates can be incorporated include bread and other bakery products, cakes and cookies, dried fruits, cereals, cereal bars, candies, particularly chewing ones, hard boiled candies and raw materials for brewing tea and fruit or plant teas in general. Tese extruded vitamin C particles are advantageously used in tea bags where their particle size can be adapted to ensure homogeneous admixture with the tea leaves.

Other advantageous uses of the vitamin C solids according to the invention include the addition of this nutrient to ready to eat or pre-cooked foods such as pizza, in particular frozen pizzas, and frying batters for fish, meat or vegetables. They are also very useful to be added to any sort of powder mixes intended for baking, spicing up foods or for solution in beverages for the treatment in particular of vitamin deficiency ailments and conditions. It goes without saying that they can also be incorporated into other pharmaceutical formulations suchs as pills and compressed pellets.

In a general manner, these vitamin C particles are useful to impart advantageous nutrient properties to any food intended for improving or modifying health conditions of humans, mammals and other house pets, or even to provide nutrients to wild animals living in human controlled reserves. They are particularly useful for pet foods in the form of extruded pellets in all sorts of forms and shapes.

Further examples of appropriate uses thereof can be found in the prior art of which US 6,436,453 is a representative example, specifically citing the utility of encapsulated nutrients in end products such as for example, bread, wafers, cookies, crackers, pretzels, pizza, and rolls, ready-to-eat breakfast cereals, hot cereals, pasta products, snacks such as fruit snacks, salty snacks, grain-based snacks, and microwave popcorn, dairy products such as yoghurt, cheese, and ice cream, sweet goods such as hard candy, soft candy, and chocolate, beverages, animal feed, pet foods such as dog food and cat food, aqua-culture foods such as fish food and shrimp feed, and special purpose foods such as baby food, infant formulas, hospital food, medical food, sports food, performance food or nutritional bars, or fortified foods, food preblends or mixes for home or food service use, such as preblends for soups or gravy, dessert mixes, dinner mixes, baking mixes such as bread mixes, and cake mixes, and baking flour.

Preferred applications include cereals and cereal bars, candies, bakes and pizzadoughs, biscuits and cake mixes.

In all these applications, the amount of vitamin C extrudates to be added depends on the effect desired and can be adapted accordingly. Moreover, owing to the fact that vitamin C is protected by the encapsulating matrix according to the present invention, the particles of the invention can be used in conjunction with all the other ingredients which are common in nutrient containing or nutraceutical foods and beverages, medicines and nutrient supplements, without the vitamin C being degraded by moisture, oxidation or heat, or by the activity of some of the other ingredients such as for example enzymes.

The concentrations of the vitamin C particles used, cited herein simply by way of non-restrictive example, are conveniently adjusted to provide at least the daily amount of vitamin C recommended, to whit 35 to 60 mg for children and 60 mg for an adult. Given the contents of these particles in vitamin, which, as indicated above can be as high as 20 or even 30% by weight of vitamin C relative to the particle weight, they represent a very advantageous form of vitamin C delivery also from the cost effectiveness point of view.

The present invention thus also provides an edible product comprising the particles of the invention. In an embodiment, the food product has a water activity of below 0.7. Preferably, the food product has a water activity below 0.5. With relatively low availability of free water in a food product, as is the case with the parameter of water activity as set out above, the matrix of the particles of the invention remains intact for a longer time and thus better protects the vitamin C from oxygen.

Water activity is preferably measured with an Aqualab CX-2 apparatus (Decagon Devices, Inc., Pullman, Washington, USA). The apparatus is to be used according to the user's manual. In particular the thermostatic water bath connected to the apparatus is adjusted to 20°C. Start the procedure once the sample has been made thermostatic in the chamber foreseen for this. At the end of the procedure, check that temperature still is at 20 ±0.5°C,

In preferred embodiments, the food product of the invention is selected from the group consisting of an instant soup, a breakfast cereal, a powdered milk, a baby food, a powdered junior drink, a powdered chocolate drink, a spread, a powdered cereal drink, a chewing gum, an effervescent tablet, a cookie, a bread, a cereal bar, and a chocolate bar.

The powdered milks or drinks are products, which are usually consumed after reconstitution of the product with water, milk and/or a juice, or another aqueous liquid. The baby food may be an infant formula, for example.

The food product of the invention preferably is a particulate or powdery food, and the particles of the invention may easily be added thereto by dry-mixing. Preferably, the particles are added in an amount which provides 10-100%, preferably 20-80% of the recommended daily allowance (RDA) of vitamin C per serving size of the food product. More preferably, a serving of the food product provides the above percentages of RDA of vitamin C.

The following examples represent particular embodiments of the present invention without limiting its general scope.

### Example 1

### Preparation of Particles Comprising Vitamin C

A dry blend composed of the following ingredients was prepared :

| Ingredients | Parts by weight |
|---|---|
| Maltodextrine 10DE ¹⁾ | 745.0 |
| Ascorbic acid ²⁾ | 200.0 |
| Lecithin | 5.0 |
| Triglyceride medium chains ³⁾ | 10.0 |
| Total | 960.0 |

| | |
|---|---|
| 1) origin : Roquette, France 2) origin : BASF, Germany 3) Neobee; origin : AB Technology, U.K. | |

The dry blend was injected into an extruder by means of a gear pump and blended with 40 parts by weight of water, under the following process conditions.
Table 1 summarizes the properties of the final product, in terms of vitamin C content (Vit C), the water content (W) and the glass transition temperature (Tg).

**Table 1 : Vitamin C content and Tg values of a delivery system prepared according to the process of the invention**

| Matrix carrier | Vitamin C content [%] | Tg [°C] |
|---|---|---|
| Composition above | 18.9 | 35.8 |

### Example 2

### Biscuits Comprising Encapsulated Vitamin C

A bakery application, consisting of 40 g of wet dough containing 0.08 g of particles of vitamin C prepared as described in Example 1, was used to bake biscuits according to the process described here-below. The wet dough had a content in vitamin C of 0.04% by weight and a water activity just before baking of 0.88. The biscuits were never kept in this wet state more than 20 minutes.

After baking, the water content had been reduced to 0.07 and analysis of the biscuits thus prepared showed that 80% by weight of the initial content in vitamin C had been retained in the baked biscuits.

### Biscuit preparation process

### I. Part I

The following ingredients were mixed in a Hobart type mixer until providing a homogeneous creaming mixture

| Ingredients | Amount/g | % by weight of total dough |
|---|---|---|
| Confectionery Sugar | 210.0 | 17.10 |
| Skimmed Milk Powder | 30.0 | 2.44 |
| Margarine (80% Fat) | 210.0 | 17.10 |
| Sugar Syrup (65% water solution) | 40.0 | 3.26 |
| Total | 490.0 | 39.90 |

### II. Part II

| Ingredients | Amount/g | % by weight of total dough |
|---|---|---|
| Wheat Flour (12.5% content in protein) | 600.0 | 48.86 |
| Water | 120.0 | 9.77 |
| Salt | 5.0 | 0.41 |
| Ammonium Bicarbonate | 7.0 | 0.57 |
| Sodium Bicarbonate | 6.0 | 0.49 |
| Total | 738.0 | 60.10 |

### III. Method for preparation of dough

Add the flour to the Part I and mix until dough is crumbly. Using the water, solubilize separately the salt, the ammonium bicarbonate and the sodium bicarbonate. If wished a flavor can be added at this stage.
Put the dough into a mixer and mix for 2 min, taking care not to overmix.

### IV. Baking

The dough prepared in III was formed into appropriate biscuit amounts and cooked for 4 min at 170°C to provide cookies with 3.5 cm of diameter, laminated at 2 mm.

### Example 3

### Preparation of edible products comprising extruded vitamin C

A variety of edible consumer end products were prepared, in a generally known manner, with an extruded vitamin C product obtained in manner similar to that described in Example 1. The extruded solid had a content of 20% by weight, relative to the weight of solid, in vitamin C.

The Table below summarizes the amount of extruded glassy vitamin C solid product used in each edible product.

**Table 2 : Edible products comprising the vitamin C delivery system prepared according to the process of the invention**

| Edible product | Extruded vitamin C | |
|---|---|---|
| Cereal bar | 0.08 | g/bar |
| Hard boiled candies | 0.04 | g/candy |
| Chewing candies | 0.04 | g/candy |
| Frozen pizza dough | 0.096 | g/120 g of dough |
| Dry mix for cake | 0.08 | g/40 g of dough |
| Biscuits | 0.08 | g/40 g of dough |

## Claims

1. An extruded solid of vitamin C, consisting of a glassy matrix of carbohydrate material containing the vitamin C, the mono- and di-saccharide content of said matrix material being not above 10% by weight, relative to the weight of carbohydrate material, and wherein at least 80% by weight of the vitamin C, relative to the total amount of vitamin C contained in the solid product, is in crystalline form.

2. An extruded solid according to claim 1, wherein the matrix material is a polysaccharide selected from the group consisting of starch, maltodextrine, corn syrups, gum Arabic and other edible polymers having a molecular weight above 900 Da, and mixtures of two or more of these.

3. An extruded solid according to claim 2, wherein the matrix material is maltodextrine having a DE around 10.

4. An extruded solid according to claim 1, comprising from about 5% to about 40% by weight of vitamin C, relative to the weight of solid.

5. An extruded solid according to claim 2, wherein the matrix comprises at least 70% by weight of maltodextrine.

6. An extruded solid according to claim 2 or 5, wherein the maltodextrine has a dextrose equivalent (DE) equal to or below 10.

7. An extruded solid according to claim 4, comprising from 0.5 to 20% by weight of vitamin C, relative to the weight of solid.

8. An edible product comprising the particles according to any of claims 1 to 7.

9. The edible product according to claim 8, **characterized in that** it has a water activity of below 0.5.

10. The edible product according to claim 8 or 9, **characterized in that** it is selected from the group consisting of bread and other bakery products, cakes and cookies, dried fruits, cereals, cereal bars, chewing and hard boiled candies, raw materials for brewing tea and fruit or plant teas.

11. The edible product according to claim 8 or 9, **characterized in that** it is selected from the group consisting of an instant soup, a breakfast cereal, a powdered milk, a baby food, a powdered junior drink, a powdered chocolate drink, a spread, a powdered cereal drink, a chewing gum, an effervescent tablet, a cereal bar, and a chocolate bar.

12. A pet food comprising the particles according to any of claims 1 to 7.
